# EUROPEAN PATENT SPECIFICATION

(11) **EP 4 156 339 B1**
(45) Date of publication and mention of the grant of the patent: **04.11.2026**
(21) Application number: 21903847.8
(22) Date of filing: 08.12.2021
(51) Int. Cl.: C01G 53/50, C01G 53/82, H01M 4/131, H01M 4/36, H01M 4/505, H01M 4/525, H01M 10/052, H01M 10/0525, H01M 4/02

(54) **POSITIVE ELECTRODE ACTIVE MATERIAL PRECURSOR FOR LITHIUM SECONDARY BATTERY, POSITIVE ELECTRODE ACTIVE MATERIAL AND POSITIVE ELECTRODE COMPRISING THE SAME**
VORLÄUFER FÜR EIN AKTIVMATERIAL EINER POSITIVEN ELEKTRODE FÜR EINE LITHIUM-SEKUNDÄRBATTERIE, AKTIVMATERIAL FÜR EINE POSITIVE ELEKTRODE UND DIESES ENTHALTENDE POSITIVE ELEKTRODE
PRÉCURSEUR DE MATÉRIAU ACTIF D'ÉLECTRODE POSITIVE POUR BATTERIE SECONDAIRE AU LITHIUM, MATÉRIAU ACTIF D'ÉLECTRODE POSITIVE ET ÉLECTRODE POSITIVE LE COMPRENANT

(30) Priority: 08.12.2020 KR 20200170277
(43) Date of publication of application: 29.03.2023
(73) Proprietor: LG Energy Solution, Ltd., Seoul 07335 (KR)
(72) Inventor: JUNG, Hae-Jung, Daejeon 34122 (KR); KIM, Ji-Hye, Daejeon 34122 (KR); YOO, Tae-Gu, Daejeon 34122 (KR); JUNG, Wang-Mo, Daejeon 34122 (KR); JO, Chi-Ho, Daejeon 34122 (KR); HEO, Jong-Wook, Daejeon 34122 (KR)
(74) Representative: Hoffmann Eitle
(86) International application number: PCT/KR2021/018559
(87) International publication number: WO 2022/124801

(56) References cited:
- CN-A- 110 817 978
- CN-A- 111 370 679
- CN-A- 111 653 756
- JP-A- 2020 001 935
- KR-A- 20150 065 046
- KR-A- 20200 001 082
- KR-A- 20200 001 082
- KR-B1- 101 768 374
- US-A1- 2019 013 519

## Description

### TECHNICAL FIELD

The present disclosure relates to a method for manufacturing a positive electrode active material for a lithium secondary battery.

### BACKGROUND ART

Recently, with the widespread use of electronic devices using batteries, for example, mobile phones, laptop computers and electric vehicles, there is a fast growing demand for secondary batteries with small size, light weight and relatively high capacity. In particular, lithium secondary batteries are gaining attention as a power source for driving mobile devices due to their light weight and high energy density advantages. Accordingly, there are many efforts to improve the performance of lithium secondary batteries.

A lithium secondary battery includes an organic electrolyte solution or a polymer electrolyte solution filled between a positive electrode and a negative electrode made of an active material capable of intercalating and deintercalating lithium ions, and electrical energy is produced by oxidation and reduction reactions during intercalation/deintercalation of lithium ions at the positive electrode and the negative electrode.

The positive electrode active material of the lithium secondary battery includes lithium cobalt oxide (LiCoO₂), lithium nickel oxide (LiNiO₂), lithium manganese oxide (LiMnO₂ or LiMn₂O₄) and a lithium iron phosphate compound (LiFePO₄). Among them, lithium cobalt oxide (LiCoO₂) is widely used due to its high operating voltage and large capacity advantages, and is used as a positive electrode active material for high voltage. However, cobalt (Co) has a limitation on the use in a large amount as a power source in the field of electric vehicles due to its price rise and unstable supply, and thus there is a need for development of an alternative positive electrode active material.

Accordingly, nickel cobalt manganese based lithium composite transition metal oxide (hereinafter simply referred to as 'NCM-based lithium composite transition metal oxide') with partial substitution of nickel (Ni) and manganese (Mn) for cobalt (Co) has been developed.

Meanwhile, the conventionally developed NCM-based lithium composite transition metal oxide is in the form of a secondary particle formed by agglomeration of primary micro particles, and has a large specific surface area and low particle strength. Additionally, when the positive electrode active material comprising the secondary particle formed by agglomeration of primary micro particles is used to manufacture an electrode, followed by a rolling process, particle cracking is severe and a large amount of gas is produced during the cell operation, resulting in low stability. In particular, high-Ni NCM-based lithium composite transition metal oxide having higher nickel (Ni) content to ensure high capacity has low structural and chemical stability and is more difficult to ensure thermal stability.

CN 110817978 A describes a positive electrode material precursor for lithium batteries having the general chemical formula n₁MCO₃-(1-n₁)NiₓMn_{y}Co_{z}(OH)₂, the precursor is of a core-shell structure, an inner core of the precursor is MCO3, an outer shell of the precursor is NiₓMn_{y}Co_{z}(OH)₂, 0<n₁≤0.5, 0<x<1, 0<y<1, 0<z<1, x+y+z=1, and M is at least one of Ni, Mn or Co. The precursor, the inner core and the shell are independently prepared, the inner core with uniform size is firstly prepared based on easily caused agglomeration of a bicarbonate and nickel cobalt manganese, and then the shell is prepared by hydroxide precipitation on the basis of the inner core.

KR 2020-0001082 A describes a nickel-based active material precursor for a lithium secondary battery, comprising a secondary particle having a plurality of particulate structures, wherein the particulate structure comprises a porous core portion and a shell portion having primary particles radially disposed on the porous core portion, and the secondary particles comprise a plurality of radial centers.

JP 2020-001935 A describes a method for producing transition metal composite hydroxide particles by a crystallization reaction that comprises: a nucleation step of producing nuclei under an acidic atmosphere by controlling a pH value to be in the range of 12 to 14; and a particle growth step of growing nuclei by controlling the obtained reaction aqueous solution containing nuclei so that the pH value is lower than that of the nucleation step and is in the range of 10.5 to 12.0. The particle growth step comprises: a first step of growing nuclei under an acidic atmosphere; and a second step of further growing nuclei under a non-oxidizing atmosphere. Included therein is that under an oxidizing atmosphere, a raw aqueous solution containing an additive element different from the transition metal is supplied; and under a non-oxidizing atmosphere, the supply of the raw aqueous solution to the reaction aqueous solution is stopped or the supply amount of the additive element to the reaction aqueous solution is reduced as compared with that under an oxidizing atmosphere.

### DISCLOSURE

### Technical Problem

The present disclosure is designed to solve the above-described problem, and therefore the present disclosure is directed to providing a method for manufacturing a positive electrode active material for a lithium secondary battery. The method involves preparing a precursor comprising a secondary particle having the average particle size D50 of the equal or similar level to the conventional art and comprising primary macro particles as opposed to the conventional art, to minimize particle cracking in the positive electrode active material during rolling.

Accordingly, the precursor can be used to provide a nickel-based positive electrode active material with long lifespan and improved gas.

### Technical Solution

An aspect of the present disclosure provides a method for manufacturing a positive electrode active material for a lithium secondary battery, comprising preparing a secondary particle precursor.

Specifically, there is provided a method for manufacturing a positive electrode active material for a lithium secondary battery, comprising preparing a secondary particle precursor for a positive electrode active material, wherein the secondary particle precursor for a positive electrode active material is defined below, the method comprising:
(S1) a first stirring step of stirring a transition metal solution comprising a nickel containing raw material, a cobalt containing raw material and a manganese containing raw material, and a nitrogen containing chelating agent and a basic compound;
(S2) a second stirring step of stirring a result of the step (S1),
wherein a first stirring speed of the first stirring step is slower than a second stirring speed of the second stirring step, and
a concentration of the nitrogen containing chelating agent of the first stirring step is higher than a concentration of the nitrogen containing chelating agent of the second stirring step:
   wherein the secondary particle precursor comprises a core and a shell, wherein a particle size D50 of the secondary particle precursor is 6±2 µm, a particle size D50 of the core is 1 to 5 µm, and the core has higher porosity than the shell, and
   sintering the secondary particle precursor for a positive electrode active material to prepare an oxide as the positive electrode active material,
   wherein the oxide is a secondary particle formed by agglomeration of primary macro particles having a particle size D50 of 1 µm or more, and the average crystal size of the primary macro particles is equal to or larger than 200 nm,
   wherein D50 corresponds to 50% cumulative volume as determined by the laser diffraction method set out later below and average crystal size is determined by X-ray diffraction analysis as set out later below.

The porosity of the core of the secondary particle precursor may be less than 2.0 g/cc on a tap density basis. More specifically, the porosity of the core may be 1.9 g/cc or less on a tap density basis.

The particle size D50 of the core of the secondary particle precursor may be 1 µm to 3 µm.

The porosity of the shell of the secondary particle precursor may be 2.0 g/cc or more on a tap density basis. More specifically, the porosity of the shell may be 2.1 g/cc or more on a tap density basis.

The secondary particle precursor may be a nickel-based lithium transition metal hydroxide represented by LiaNi_{1-x-y}CoₓM1_{y}M2_{w}(OH)₂ wherein 1.0≤a≤1.5, 0≤x≤0.2, 0≤y≤0.2, 0≤w≤0.1, 0≤x+y≤0.2, M1 is at least one selected from the group consisting of Mn and Al, and M2 is at least one selected from the group consisting of Ba, Ca, Zr, Ti, Mg, Ta, Nb and Mo.

In the method of the present invention, the concentration of the nitrogen containing chelating agent of the first stirring step may be 5000 ppm or more, and the concentration of the nitrogen containing chelating agent of the second stirring step may be 4000 ppm or less.

The concentration of the nitrogen containing chelating agent of the first stirring step may be 5000 ppm or more, and the concentration of the nitrogen containing chelating agent of the second stirring step may be 5000 ppm or less.

More specifically, the first stirring speed may be 800 rpm or less, and the second stirring speed may be 1000 rpm or more.

### Advantageous Effects

According to an embodiment of the present disclosure, it is possible to provide a positive electrode active material precursor comprising a secondary particle with improved resistance by the simultaneous growth of the average particle size D50 and the crystal size of the primary macro particle.

According to an embodiment of the present disclosure, it is possible to provide a precursor for providing a nickel-based positive electrode active material with the increased press density, long lifespan and improved gas performance.

### DESCRIPTION OF DRAWINGS

The accompanying drawings illustrate the preferred embodiment of the present disclosure, and together with the above description, serve to help a further understanding of the technical aspects of the present disclosure, so the present disclosure should not be construed as being limited to the drawings. Meanwhile, the shape, size, scale or proportion of the elements in the accompanying drawings may be exaggerated to emphasize a more clear description.
FIG. 1 is a scanning electron microscopy (SEM) image of a positive electrode active material according to comparative example of the present disclosure.
FIG. 2 is an SEM image of a positive electrode active material according to an embodiment of the present disclosure.
FIG. 3 is a schematic diagram of a positive electrode active material particle after primary sintering of an existing precursor for a secondary particle.
FIG. 4 is a schematic diagram of a positive electrode active material particle after primary sintering of a precursor for a secondary particle according to an embodiment of the present disclosure.

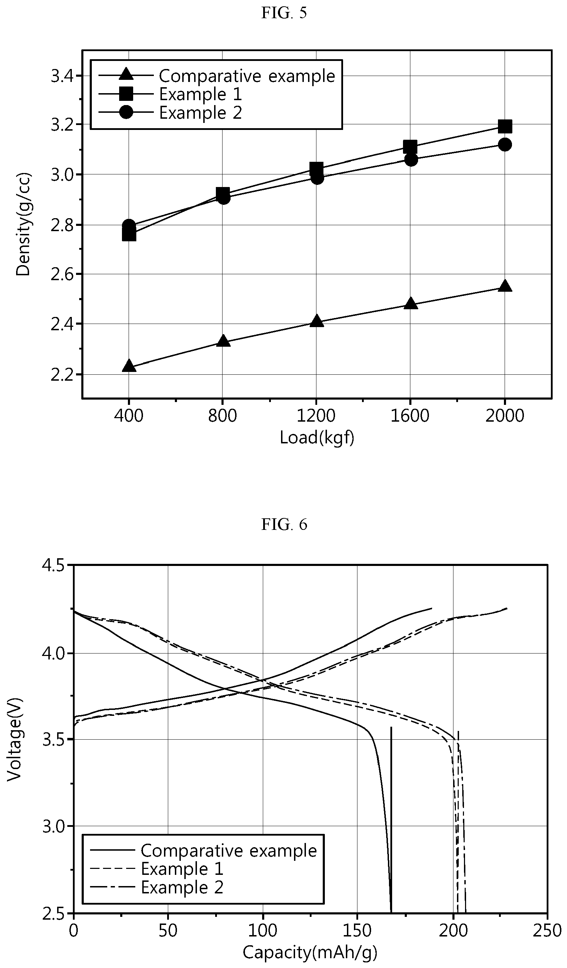

FIG. 5 is a graph showing the press density of example and comparative example of the present disclosure.
FIG. 6 is a graph showing the charge/discharge profiles of example and comparative example of the present disclosure.

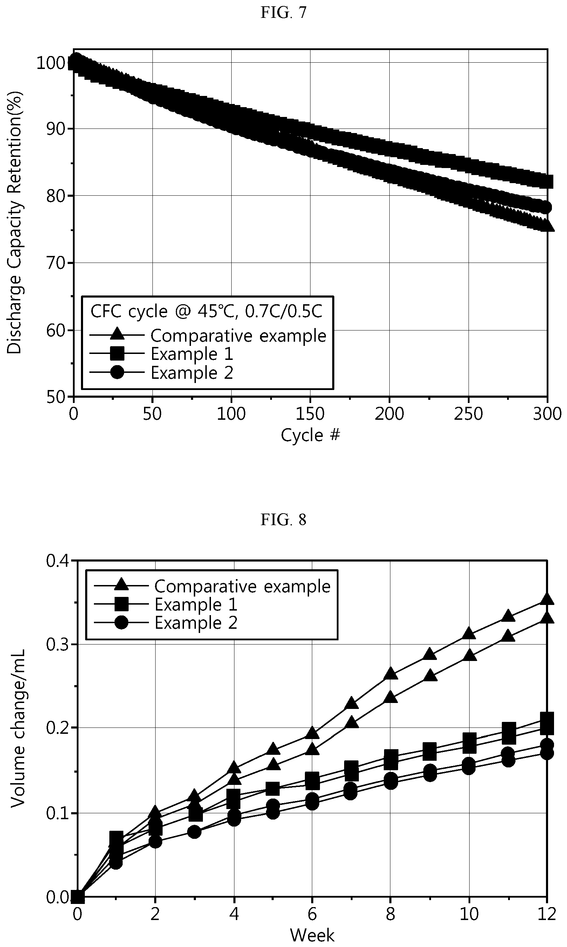

FIG. 7 is a graph showing the high temperature life characteristics of example and comparative example of the present disclosure.
FIG. 8 is a graph showing the measured amount of produced gas of example and comparative example of the present disclosure.

### BEST MODE

Hereinafter, embodiments of the present disclosure will be described in detail. Prior to the description, it should be understood that the terms or words used in the specification and the appended claims should not be construed as limited to general and dictionary meanings, but interpreted based on the meanings and concepts corresponding to technical aspects of the present disclosure, on the basis of the principle that the inventor is allowed to define terms appropriately for the best explanation.

Unless the context clearly indicates otherwise, it will be understood that the term "comprises" when used in this specification, specifies the presence of stated elements, but does not preclude the presence or addition of one or more other elements.

**In** the specification and the appended claims, "comprising multiple crystal grains" refers to a crystal structure formed by two or more crystal grains having a specific range of average crystal sizes. **In** this instance, the crystal size of the crystal grain may be quantitatively analyzed using X-ray diffraction analysis (XRD) by Cu Kα X-ray (Xrα). Specifically, the average crystal size of the crystal grain may be quantitatively analyzed by putting a prepared particle into a holder and analyzing diffraction grating for X-ray radiation onto the particle.

**In** the specification and the appended claims, D50 may be defined as a particle size at 50% of particle size distribution, and may be measured using a laser diffraction method. For example, a method for measuring the average particle size D50 of a positive electrode active material may include dispersing particles of the positive electrode active material in a dispersion medium, introducing into a commercially available laser diffraction particle size measurement device (for example, Microtrac MT 3000), irradiating ultrasound of about 28 kHz with the output power of 60W, and calculating the average particle size D50 corresponding to 50% of cumulative volume in the measurement device.

In the present disclosure, 'primary particle' refers to a particle having seemingly absent grain boundary when observed with the field of view of 5000 to 20000 magnification using a scanning electron microscope.

In the present disclosure, 'secondary particle' is a particle formed by agglomeration of the primary particles.

In the present disclosure, 'monolith' refers to a particle that exists independently of the secondary particle, and has seemingly absent grain boundary, and for example, it is a particle having the particle diameter of 0.5 µm or more.

In the present disclosure, 'particle' may include any one of the monolith, the secondary particle and the primary particle or all of them.

An aspect of the present disclosure provides a precursor for providing a positive electrode active material in the form of a secondary particle of different type from the conventional art.

### Precursor for positive electrode active material

The precursor that is obtainable as part of the method of the invention will first be described.

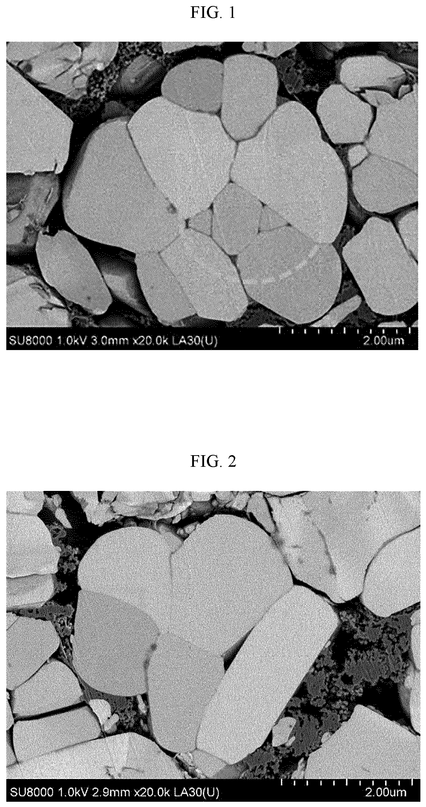

As can be seen from FIG. 1, the conventional secondary particle does not have uniform grain growth in a positive electrode active material. In this case, it is impossible to uniformly prepare secondary particles, resulting in poor electrochemical performance.

In trying to solve the problem, the inventors have uniformly grown particles in a positive electrode active material by varying the density in a precursor. As can be seen from FIG. 2, when a secondary particle is prepared using the precursor according to an aspect of the present disclosure, it is possible to provide a positive electrode active material with uniform grain growth.

Specifically, a secondary particle precursor for a positive electrode active material according to an aspect of the present disclosure comprises a core and a shell, wherein the particle size D50 of the secondary particle precursor is 6±2 µm,
the particle size D50 of the core is 1 to 5 µm, and
the core has higher porosity than the shell.

In general, a nickel-based lithium transition metal oxide is a secondary particle. The secondary particle may be an agglomerate of primary particles.

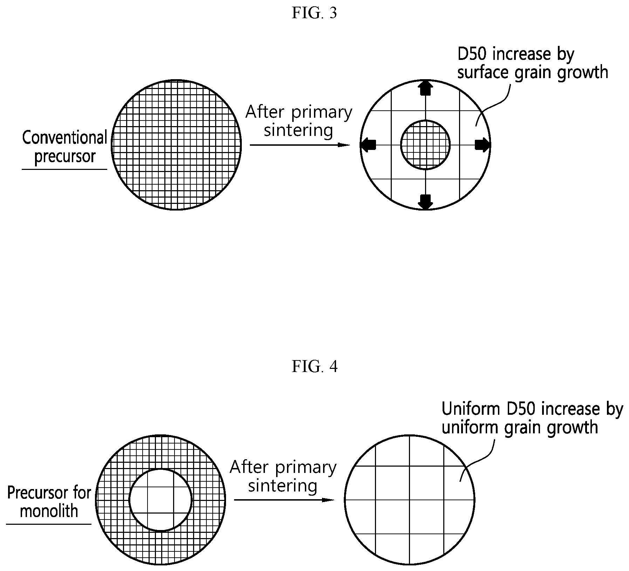

Specifically, a secondary particle of dense nickel-based lithium transition metal hydroxide prepared by a coprecipitation method is used for a precursor, and the precursor is mixed with a lithium precursor and sintered at the temperature of less than 960°C, yielding a secondary particle of nickel-based lithium transition metal oxide. The series of processes is shown in FIG. 3. Referring to FIG. 3, when the conventional dense precursor goes through primary sintering, the primary particles on the surface increases in the average particle size by the grain growth from the secondary particle surface, but the primary particles inside reduce in the average particle size. When a positive electrode active material comprising the conventional secondary particle is coated on a current collector, followed by rolling, the particle itself cracks, resulting in increased specific surface area. When the specific surface area increases, rock salt is formed on the surface and the resistance reduces.

In contrast, in an aspect of the present disclosure, to solve the above-described problem, as opposed to the conventional method using the above-described dense nickel-based lithium transition metal hydroxide secondary particle as a precursor, when a porous precursor rather than the conventional precursor is used, a monolithic nickel-based lithium transition metal oxide that is not in the form of a secondary particle any longer may be obtained by synthesizing at low sintering temperature compared to the same nickel content.

The secondary particle precursor may be a nickel-based lithium transition metal hydroxide represented by LiaNi_{1-x-y}CoₓM1_{y}M2_{w}(OH)₂ (1.0≤a≤1.5, 0≤x≤0.2, 0≤y≤0.2, 0≤w≤0.1, 0≤x+y≤0.2, M1 is at least one selected from the group consisting of Mn and Al, and M2 is at least one selected from the group consisting of Ba, Ca, Zr, Ti, Mg, Ta, Nb and Mo).

As shown in FIG. 4, the precursor for a secondary particle according to an aspect of the present disclosure has higher porosity of the core than the porosity of the shell. Accordingly, it is possible to grow the primary macro particle having a large particle size without increasing the sintering temperature, and by contrast, the secondary particle may grow less than the conventional art. Additionally, it is possible to provide the secondary particle with uniform grain growth. As a result, it is possible to achieve the uniform particle growth to the inside, thereby providing good electrical and chemical properties, minimizing particle cracking and improving the lifespan and gas performance.

In a specific embodiment of the present disclosure, the precursor for a secondary particle has the particle size of 6±2 µm. That is, the precursor for a secondary particle according to an aspect of the present disclosure may have the equal or similar average particle size D50 to the conventional art.

In a specific embodiment of the present disclosure, the particle size D50 of the core is 1 to 5 µm. More specifically, the particle size D50 of the core may be 1 µm to 3 µm.

Meanwhile, in a specific embodiment of the present disclosure, the shell refers to the remaining part of the precursor for monolith except the core. The shell is defined as a portion from a boundary at which the porosity decreases from the core.

The thickness of the shell refers to the thickness of the remaining part calculated by subtracting the particle size 50 of the core from the particle size D50 of the entire precursor. The thickness of the shell may be 0.1 to 5 µm, specifically 0.5 µm to 4 µm, and more specifically 1 to 3 µm.

In the secondary particle precursor according to an aspect of the present disclosure, the core has higher porosity than the shell.

In this instance, the porosity may be determined by the tap density, and in a specific embodiment of the present disclosure, the porosity of the core may be less than 2.0 g/cc on the tap density basis. More specifically, the porosity of the core may be 1.9 g/cc or less, 1.8 g/cc or less, 1.7 g/c, or 1.5 g/cc or less. In a specific embodiment of the present disclosure, the porosity of the shell may be 2.0 g/cc or more on the tap density basis. More specifically, the porosity of the shell may be 2.0 g/cc or more, 2.1 g/cc or more, 2.2 g/cc or more, or 2.5 g/cc or more. As described above, when the precursors having different tap densities are used, it is possible to grow the primary macro particle having a large particle size without increasing the sintering temperature, and by contrast, the secondary particle may grow less than the conventional art. Additionally, it is possible to provide the secondary particle with uniform grain growth.

The present invention provides a positive electrode active material for a lithium secondary battery prepared as an oxide by sintering the above-described precursor for a positive electrode active material.

Accordingly, the secondary particle that constitutes the oxide according to an aspect of the present disclosure has the equal or similar average particle size D50 to the conventional art and a large average particle size D50 of the primary particle. That is, as opposed to the typical configuration of the conventional positive electrode active material, i.e., in the form of a secondary particle formed by agglomeration of primary particles having a small average particle size, it is provided a secondary particle formed by agglomeration of primary macro particles, namely, primary particles having the increased size.

In a specific embodiment of the present disclosure, the secondary particle may be an agglomerate of 1 to 10 primary macro particles. More specifically, the secondary particle may be an agglomerate of 1 or more, 2 or more, 3 or more, or 4 or more primary macro particles in the above-described range, and may be an agglomerate of 10 or less, 9 or less, 8 or less, or 7 or less primary macro particles in the above-described range.

In the present disclosure, the 'primary macro particle' may have the average particle size D50 of 1 µm or more.

In a specific embodiment of the present disclosure, the average particle size of the primary macro particle may be 1 µm or more, 2 µm or more, 2.5 µm or more, 3 µm or more, or 3.5 µm or more, and may be 5 µm or less, 4.5 µm or less, or 4 µm or less. When the average particle size of the primary macro particle is less than 1 µm, it corresponds to the conventional secondary particle, and particle cracking may occur in the rolling process.

Meanwhile, in the present disclosure, the 'primary macro particle' may have a ratio of the average particle size D50/the average crystal size of 10 or more. That is, when compared with the primary micro particle that forms the conventional secondary particle, the primary macro particle has simultaneous growth of the average particle size and the average crystal size of the primary particle.

From the perspective of crack, a seemingly absent grain boundary and a large average particle size like the monolith are advantageous. Accordingly, the inventors made many efforts to grow the average particle size D50 of the primary particle. In the study, the inventors found that when only the average particle size D50 of the primary particle is increased by over-sintering, rock salt is formed on the surface of the primary particle and the resistance increases. Additionally, the inventors found that to solve the problem, growing the average crystal size of the primary particle together is advantageous to reduce the resistance.

Accordingly, in the present disclosure, the primary macro particle may be a particle having a large average particle size as well as a large average crystal size and a seemingly absent grain boundary.

As described above, the simultaneous growth of the average particle size and the average crystal size of the primary particle reduces the resistance and provides a long life advantage, compared to the monolith having a large resistance increase in the presence of rock salt on the surface due to the sintering at high temperature.

As described above, compared to the monolith, the "secondary particle formed by agglomeration of primary macro particles" used in an aspect of the present disclosure is advantageous in terms of the increased size of the primary particle itself, the reduced rock salt formation, and the consequential reduced resistance.

In this instance, the average crystal size of the primary macro particle may be quantitatively analyzed using X-ray diffraction analysis (XRD) by Cu Kα X-ray. Specifically, the average crystal size of the primary macro particle may be quantitatively analyzed by putting the prepared particle into a holder and analyzing diffraction grating for X-ray radiation onto the particle.

In a specific embodiment of the present disclosure, the ratio of the average particle size D50/the average crystal size may be 4 or more, 7 or more, or 10 or more, and may be 30 or less or 20 or less.

Additionally, the average crystal size of the primary macro particle is 200 nm or more or 250 nm or more, and may be 450 nm or less or 400 nm or less.

The secondary particle according to an aspect of the present disclosure has the equal or similar average particle size D50 to the conventional art and a large average particle size D50 of the primary particle. That is, as opposed to the typical configuration of the conventional positive electrode active material, i.e., in the form of a secondary particle formed by agglomeration of primary particles having a small average particle size, there is provided a secondary particle formed by agglomeration of primary macro particles, namely, primary particles having the increased size.

The secondary particle according to an aspect of the present disclosure has the average particle size D50 of 3 µm to 5 µm. More specifically, the average particle size D50 may be 3 µm or more, 3.5 µm or more, 4 µm or more, or 4.5 µm or more, and may be 5 µm or less, 4.5 µm or less, or 4 µm or less, or 3.5 µm or less.

In general, no matter what particle type, at the same composition, the particle size and the average crystal size in the particle increase with the increasing sintering temperature. In contrast, compared to the conventional art, the primary particle according to an aspect of the present disclosure may grow to the primary macro particle having a large particle size without increasing the sintering temperature, and by contrast, the secondary particle may grow less than the conventional art.

Accordingly, the secondary particle according to an aspect of the present disclosure has the equal or similar average particle size D50 to the conventional secondary particle and comprises primary macro particles having a larger average particle size and a larger average crystal size than the conventional primary micro particle.

In a specific embodiment of the present disclosure, a ratio of the average particle size D50 of the secondary particle/the average particle size D50 of the primary macro particle may be 2 to 4 times.

The secondary particle may be a nickel-based lithium transition metal oxide.

In this instance, the nickel-based lithium transition metal oxide may comprise LiaNi_{1-x-y}CoₓM1_{y}M2_{w}O₂ (1.0≤a≤1.5, 0≤x≤0.2, 0≤y≤0.2, 0≤w≤0.1, 0≤x+y≤0.2, M1 is at least one selected from the group consisting of Mn and Al, and M2 is at least one selected from the group consisting of Ba, Ca, Zr, Ti, Mg, Ta, Nb and Mo).

In the above formula, a, x, y and w denote a mole ratio of each element in the nickel-based lithium transition metal oxide.

In this instance, the doped metal M1 and M2 in the crystal lattice of the secondary particle may be disposed on the surface of only a part of the particle depending on the position preference of M1 and/or M2, or may be positioned with a concentration gradient that decreases in a direction from the particle surface to the center of the particle, or may be uniformly positioned over the entire particle.

When the secondary particle is doped with or coated and doped with metal M1 and M2, in particular, the long life characteristics of the active material may be further improved by surface structure stabilization.

### Method for preparing precursor for secondary particle of positive electrode active material

The precursor according to an aspect of the present disclosure may be prepared by the following method.

Specifically, the precursor is prepared by adding a nitrogen containing chelating agent and a basic compound to a transition metal solution comprising a nickel containing raw material, a cobalt containing raw material and a manganese containing raw material, stirring and causing coprecipitation reaction.

The nickel containing raw material may include, for example, nickel containing acetate, nitrate, sulfate, halide, sulfide, hydroxide, oxide or oxyhydroxide, and specifically, may include at least one of Ni(OH)₂, NiO, NiOOH, NiCO₃ • 2Ni(OH)₂ • 4H₂O, NiC₂O₂ • 2H₂O, Ni(NO₃)₂ • 6H₂O, NiSO₄, NiSO₄ • 6H₂O, an aliphatic nickel salt or nickel halide, but is not limited thereto.

The cobalt containing raw material may include cobalt containing acetate, nitrate, sulfate, halide, sulfide, hydroxide, oxide or oxyhydroxide, and specifically, may include at least one of Co(OH)₂, CoOOH, Co(OCOCH₃)₂ • 4H₂O, Co(NO₃)₂ • 6H₂O, CoSO₄ or Co(SO₄)₂ • 7H₂O, but is not limited thereto.

The manganese containing raw material may include, for example, at least one of manganese containing acetate, nitrate, sulfate, halide, sulfide, hydroxide, oxide or oxyhydroxide, and specifically, may include, for example, at least one of manganese oxide such as Mn₂O₃, MnO₂, Mn₃O₄; a manganese salt such as MnCO₃, Mn(NO₃)₂, MnSO₄, manganese acetate, a manganese salt of dicarboxylic acid, manganese citrate and an aliphatic manganese salt; manganese oxyhydroxide or manganese chloride, but is not limited thereto.

The transition metal solution may be prepared by adding the nickel containing raw material, the cobalt containing raw material and the manganese containing raw material to a solvent, to be specific, water, or a mixed solvent of water and an organic solvent (for example, alcohol, etc.) that mixes with water to form a homogeneous mixture, or may be prepared by mixing an aqueous solution of the nickel containing raw material, an aqueous solution of the cobalt containing raw material and the manganese containing raw material.

The ammonium cation containing chelating agent may include, for example, at least one of NH₄OH, (NH₄)₂SO₄, NH₄NO₃, NH₄Cl, CH₃COONH₄ or NH₄CO₃, but is not limited thereto. Meanwhile, the ammonium cation containing chelating agent may be used in the form of an aqueous solution, and in this instance, the solvent may include water or a mixture of water and an organic solvent (specifically, alcohol, etc.) that mixes with water to form a homogeneous mixture.

The basic compound may include at least one of hydroxide or hydrate of alkali metal or alkaline earth metal such as NaOH, KOH or Ca(OH)₂. The basic compound may be used in the form of an aqueous solution, and in this instance, the solvent may include water, or a mixture of water and an organic solvent (specifically, alcohol, etc.) that mixes with water to form a homogeneous mixture.

The basic compound may be added to control the pH of the reaction solution, and may be added in such an amount that the pH of the metal solution is 11 to 13.

In this instance, in the stirring step, the concentration of the nitrogen containing chelating agent and the reaction speed of the stirrer may be controlled to prepare a core-shell secondary particle precursor.

Specifically, the stirring step includes a first stirring step and a second stirring step, the concentration of the nitrogen containing chelating agent of the first stirring step is higher than the concentration of the nitrogen containing chelating agent of the second stirring step, and the first stirring speed of the first stirring step is slower than the second stirring speed of the second stirring step.

For example, the concentration the nitrogen containing chelating agent of the first stirring step may be 5000 ppm or more, 6000 ppm or more, 7000 ppm or more, 8000 ppm or more, 9000 ppm or more or 10,000 ppm or more, and the concentration of the nitrogen containing chelating agent of the second stirring step may be 5000 ppm or less, 4000 ppm or less, or 3000 ppm or less. More specifically, the concentration of the nitrogen containing chelating agent of the first stirring step may be 5000 ppm or more, and the concentration of the nitrogen containing chelating agent of the second stirring step may be 4000 ppm or less.

For example, the first stirring speed may be 800 rpm or less, 700 rpm or less, or 600 rpm or less, and the second stirring speed may be 1000 rpm or more, 1100 rpm or more, or 1200 rpm or more.

Meanwhile, the coprecipitation reaction may be performed at 40°C to 70°C in an inert atmosphere of nitrogen or argon. That is, primary sintering may be performed.

The secondary particle precursor for a positive electrode active material comprising the core and the shell having the above-described features may be prepared by the above-described process.

Subsequently, the above-described precursor is mixed with a lithium raw material and goes through secondary sintering.

The lithium raw material may include, without limitation, any type of material that dissolves in water, and may include, for example, lithium containing sulfate, nitrate, acetate, carbonate, oxalate, citrate, halide, hydroxide or oxyhydroxide. Specifically the lithium raw material may include at least one of Li₂CO₃, LiNO₃, LiNO₂, LiOH, LiOH • H₂O, LiH, LiF, LiCl, LiBr, LiI, CH₃COOLi, Li₂O, Li₂SO₄, CH₃COOLi, or Li₃C₆H₅O₇.

In the case of high-Ni NCM based lithium composite transition metal oxide having the nickel (Ni) content of 60 mol% or more, the secondary sintering may be performed at 700 to 1,000°C, more preferably 780 to 980°C, and even more preferably 780 to 900°C. The primary sintering may be performed in an air or oxygen atmosphere, and may be performed for 10 to 35 hours.

Through the above-described process, a positive electrode active material comprising a secondary particle agglomerate comprising primary macro particles may be prepared.

### Positive electrode and lithium secondary battery

According to another embodiment of the present disclosure, there are provided a positive electrode for a lithium secondary battery comprising the positive electrode active material, and a lithium secondary battery.

Specifically, the positive electrode comprises a positive electrode current collector and a positive electrode active material layer comprising the positive electrode active material, formed on the positive electrode current collector.

In the positive electrode, the positive electrode current collector is not limited to a particular type and may include any type of material having conductive properties without causing any chemical change to the battery, for example, stainless steel, aluminum, nickel, titanium, sintered carbon or aluminum or stainless steel treated with carbon, nickel, titanium or silver on the surface. Additionally, the positive electrode current collector may be generally 3 to 500 µm in thickness, and may have microtexture on the surface to improve the adhesion strength of the positive electrode active material. For example, the positive electrode current collector may come in various forms, for example, films, sheets, foils, nets, porous bodies, foams and non-woven fabrics.

In addition to the above-described positive electrode active material, the positive electrode active material layer may comprise a conductive material and a binder.

In this instance, the conductive material is used to impart conductivity to the electrode, and may include, without limitation, any type of conductive material having the ability to conduct electrons without causing any chemical change to the battery. Specific examples of the conductive material may include at least one of graphite, for example, natural graphite or artificial graphite; carbon-based materials, for example, carbon black, acetylene black, ketjen black, channel black, furnace black, lamp black, thermal black and carbon fibers; metal powder or metal fibers, for example, copper, nickel, aluminum and silver; conductive whiskers, for example, zinc oxide and potassium titanate; conductive metal oxide, for example, titanium oxide; or conductive polymers, for example, polyphenylene derivatives. In general, the conductive material may be included in an amount of 1 to 30 weight% based on the total weight of the positive electrode active material layer.

Additionally, the binder serves to improve the bonds between the positive electrode active material particles and the adhesion strength between the positive electrode active material and the positive electrode current collector. Specific examples of the binder may include at least one of polyvinylidene fluoride (PVDF), polyvinylidene fluoride-hexafluoropropylene copolymer (PVDF-co-HFP), polyvinylalcohol, polyacrylonitrile, carboxymethylcellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or a variety of copolymers thereof. The binder may be included in an amount of 1 to 30 weight% based on the total weight of the positive electrode active material layer.

The positive electrode may be manufactured by the commonly used positive electrode manufacturing method except using the above-described positive electrode active material. Specifically, the positive electrode may be manufactured by coating a positive electrode active material layer forming composition comprising the positive electrode active material and optionally, the binder and the conductive material on the positive electrode current collector, drying and rolling. In this instance, the type and amount of the positive electrode active material, the binder and the conductive material may be the same as described above.

The solvent may include solvents commonly used in the corresponding technical field, for example, at least one of dimethyl sulfoxide (DMSO), isopropyl alcohol, N-methylpyrrolidone (NMP), acetone or water. The solvent may be used in such an amount to have sufficient viscosity for good thickness uniformity when dissolving or dispersing the positive electrode active material, the conductive material and the binder and coating to manufacture the positive electrode in view of the slurry coating thickness and the production yield.

Alternatively, the positive electrode may be manufactured by casting the positive electrode active material layer forming composition on a support, peeling off a film from the support and laminating the film on the positive electrode current collector.

According to still another embodiment of the present disclosure, there is provided an electrochemical device comprising the positive electrode. Specifically, the electrochemical device may include a battery or a capacitor, and more specifically, a lithium secondary battery.

Specifically, the lithium secondary battery comprises a positive electrode, a negative electrode disposed opposite the positive electrode, a separator interposed between the positive electrode and the negative electrode and an electrolyte, and the positive electrode is the same as described above. Additionally, optionally, the lithium secondary battery may further comprise a battery case in which an electrode assembly comprising the positive electrode, the negative electrode and the separator is received, and a sealing member to seal up the battery case.

In the lithium secondary battery, the negative electrode comprises a negative electrode current collector and a negative electrode active material layer positioned on the negative electrode current collector.

The negative electrode current collector may include any type of material having high conductivity without causing any chemical change to the battery, for example, copper, stainless steel, aluminum, nickel, titanium, sintered carbon, copper or stainless steel treated with carbon, nickel, titanium or silver on the surface and an aluminum-cadmium alloy, but is not limited thereto. Additionally, the negative electrode current collector may be generally 3 to 500 µm in thickness, and in the same way as the positive electrode current collector, the negative electrode current collector may have microtexture on the surface to improve the bonding strength of the negative electrode active material. For example, the negative electrode current collector may come in various forms, for example, films, sheets, foils, nets, porous bodies, foams and non-woven fabrics.

In addition to the negative electrode active material, the negative electrode active material layer optionally comprises a binder and a conductive material. For example, the negative electrode active material layer may be made by coating a negative electrode forming composition comprising the negative electrode active material, and optionally the binder and the conductive material on the negative electrode current collector and drying, or by casting the negative electrode forming composition on a support, peeling off a film from the support and laminating the film on the negative electrode current collector.

The negative electrode active material may include compounds capable of reversibly intercalating and deintercalating lithium. Specific examples of the negative electrode active material may include at least one of a carbonaceous material, for example, artificial graphite, natural graphite, graphitizing carbon fibers, amorphous carbon; a metallic compound that can form alloys with lithium, for example, Si, Al, Sn, Pb, Zn, Bi, In, Mg, Ga, Cd, Si alloy, Sn alloy or Al alloy; metal oxide capable of doping and undoping lithium such as SiOβ (0 < β < 2), SnO₂, vanadium oxide, lithium vanadium oxide; or a complex comprising the metallic compound and the carbonaceous material such as a Si-C complex or a Sn-C complex. Additionally, a metal lithium thin film may be used for the negative electrode active material. Additionally, the carbon material may include low crystalline carbon and high crystalline carbon. The low crystalline carbon typically includes soft carbon and hard carbon, and the high crystalline carbon typically includes high temperature sintered carbon, for example, amorphous, platy, flaky, spherical or fibrous natural graphite or artificial graphite, Kish graphite, pyrolytic carbon, mesophase pitch based carbon fiber, meso-carbon microbeads, mesophase pitches and petroleum or coal tar pitch derived cokes.

Additionally, the binder and the conductive material may be the same as those of the above-described positive electrode.

Meanwhile, in the lithium secondary battery, the separator separates the negative electrode from the positive electrode and provides a passage for movement of lithium ions, and may include, without limitation, any separator commonly used in lithium secondary batteries, and in particular, preferably the separator may have low resistance to the electrolyte ion movement and good electrolyte solution wettability. Specifically, the separator may include, for example, a porous polymer film made of polyolefin-based polymer such as ethylene homopolymer, propylene homopolymer, ethylene/butene copolymer, ethylene/hexene copolymer and ethylene/methacrylate copolymer or a stack of two or more porous polymer films. Additionally, the separator may include common porous non-woven fabrics, for example, nonwoven fabrics made of high melting point glass fibers and polyethylene terephthalate fibers. Additionally, to ensure the heat resistance or mechanical strength, the coated separator comprising ceramics or polymer materials may be used, and may be selectively used with a single layer or multilayer structure.

Additionally, the electrolyte used in the present disclosure may include an organic liquid electrolyte, an inorganic liquid electrolyte, a solid polymer electrolyte, a gel polymer electrolyte, a solid inorganic electrolyte and a molten inorganic electrolyte, available in the manufacture of lithium secondary batteries, but is not limited thereto.

Specifically, the electrolyte may comprise an organic solvent and a lithium salt.

The organic solvent may include, without limitation, any type of organic solvent that acts as a medium for the movement of ions involved in the electrochemical reaction of the battery. Specifically, the organic solvent may include an ester-based solvent, for example, methyl acetate, ethyl acetate, γ-butyrolactone, ε-caprolactone; an ether-based solvent, for example, dibutyl ether or tetrahydrofuran; a ketone-based solvent, for example, cyclohexanone; an aromatic hydrocarbon-based solvent, for example, benzene, fluorobenzene; a carbonate-based solvent, for example, dimethylcarbonate (DMC), diethylcarbonate (DEC), methylethylcarbonate (MEC), ethylmethylcarbonate (EMC), ethylene carbonate (EC), propylene carbonate (PC); an alcohol-based solvent, for example, ethylalcohol, isopropyl alcohol; nitriles of R-CN (R is C2 to C20 straight-chain, branched-chain or cyclic hydrocarbon, and may comprise an exocyclic double bond or ether bond); amides, for example, dimethylformamide; dioxolanes, for example, 1,3-dioxolane; or sulfolanes. Among them, the carbonate-based solvent is desirable, and more preferably, cyclic carbonate (for example, ethylene carbonate or propylene carbonate) having high ionic conductivity and high dielectric constant which contributes to the improved charge/discharge performance of the battery may be mixed with a linear carbonate-based compound (for example, ethylmethyl carbonate, dimethyl carbonate or diethyl carbonate) of low viscosity. In this case, the cyclic carbonate and the chain carbonate may be mixed at a volume ratio of about 1: 1 to about 1:9 to improve the performance of the electrolyte solution.

The lithium salt may include, without limitation, any compound that can provide lithium ions used in lithium secondary batteries. Specifically, the lithium salt may include LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt may range from 0.1 to 2.0M. When the concentration of the lithium salt is included in the above-described range, the electrolyte has the optimal conductivity and viscosity, resulting in good performance of the electrolyte and effective movement of lithium ions.

In addition to the above-described constituent substances of the electrolyte, the electrolyte may further comprise, for example, at least one type of additive of a haloalkylene carbonate-based compound such as difluoro ethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride to improve the life characteristics of the battery, prevent the capacity fading of the battery and improve the discharge capacity of the battery. In this instance, the additive may be included in an amount of 0.1 to 5 weight% based on the total weight of the electrolyte.

The lithium secondary battery comprising the positive electrode active material according to the present disclosure is useful in the field of mobile devices including mobile phones, laptop computers and digital cameras, and electric vehicles including hybrid electric vehicles (HEVs).

Accordingly, according to another embodiment of the present disclosure, there are provided a battery module comprising the lithium secondary battery as a unit cell and a battery pack comprising the same.

The battery module or the battery pack may be used as a power source of at least one medium-large scale device of power tools; electric vehicles comprising electric vehicles (EVs), hybrid electric vehicles, and plug-in hybrid electric vehicles (PHEVs); or energy storage systems.

Hereinafter, the embodiments of the present disclosure will be described in sufficiently detail for those having ordinary skill in the technical field pertaining to the present disclosure to easily practice the present disclosure.

### Example 1.

### [Preparation of secondary particle precursor for positive electrode active material]

NiSO₄, CoSO₄ and MnSO₄ are mixed at a composition ratio of 83:11:6 (mole ratio) into Metals Acid using a Continuous Stirring Tank Reactor (CSTR), and coprecipitation is performed using ammonia as a chelating agent, yielding a coprecipitation product using NaOH which provides oxide ions (OH) as a coprecipitating agent. Subsequently, the coprecipitation product is washed and dried in a dryer of 120°C for about 12 hours to prepare a Ni_{0.83}Co_{0.11}Mn_{0.6}(OH)₂ precursor powder. In this process, a porous core is formed by increasing the concentration of ammonia in the reactant solution within the reactor above 10,000 ppm and stirring at the stirring speed of 600 rpm. Subsequently, a dense shell is formed by lowering the concentration of ammonia to the level of 3000 ppm and stirring at the stirring speed of 1200 rpm, so a core-shell secondary particle precursor for a positive electrode active material is prepared. In this instance, the internal condition of the reactor is for maintaining the temperature of the reactant solution at 60°C and the pH at 10.5 to 12.0.

### [Preparation of positive electrode active material]

The prepared positive electrode active material precursor is in the form of the particle having the porous core and the dense shell. The synthesized Ni_{0.83}Co_{0.11}Mn_{0.6}(OH)₂ precursor is mixed with a lithium raw material LiOH such that the final Li/Me mole ratio is 1.03 and thermally treated at 800°C for 10 hours to synthesize a Li(Ni_{0.83}Co_{0.11}Mn_{0.6})O₂ positive electrode active material.

### Example 2.

A positive electrode active material is synthesized by the same method as example 1 except that the stirring speed for forming a porous core is changed to 1000 rpm and the stirring speed for forming a shell is changed to 2000 rpm in the preparation of a secondary particle precursor for a positive electrode active material.

### Comparative example.

### [Preparation of precursor for positive electrode active material]

In comparative example, a dense precursor without a core and a shell is prepared by stirring at the stirring speed of 1500 rpm while maintaining the concentration of ammonia in the reactant solution within the reactor at the level of 3000 ppm in the coprecipitation process. Except for the foregoing description, a precursor is prepared by the same method as example.

### [Preparation of positive electrode active material]

The other conditions are applied in the same way as example, but a Li(Ni_{0.83}Co_{0.11}Mn_{0.6})O₂ positive electrode active material is synthesized by thermal treatment at the sintering temperature of 850°C for 10 hours.

**[Table 1]**

| Sample | | Unit | Comparative example | Example 1 | Example 2 |
|---|---|---|---|---|---|
| Precursor(D50) | Core | µm | None | 1.5 | 2.0 |
| | Shell | µm | | 2.5 | 2.5 |
| Tap density of precursor | Core | g/cc | 2.2 | 1.8 | 1.6 |
| | Shell | g/cc | | 2.2 | 2.0 |
| Particle size (D50) | Precursor | µm | 4.0 | 4.0 | 4.5 |
| Particle size (D50) | Secondary particle after sintering | µm | 4.5 | 4.1 | 4.5 |
| Particle size (D50) | Primary particle after sintering | µm | 0.5 | 2.0 | 2.5 |
| Crystal size | Average crystal size of primary particle after sintering | nm | 120 | 230 | 270 |
| Press density of positive electrode active material | | g/cc | 2.55 | 3.19 | 3.12 |
| Electrochemical performance of positive | 0.1C Charge | mAh/g | 188.9 | 229.2 | 228.5 |
| | 0.1C Discharge | mAh/g | 167.8 | 203.0 | 207.0 |
| electrode active material | Efficiency | % | 88.9 | 88.6 | 90.6 |

As can be seen from example and comparative example, an embodiment according to an aspect of the present disclosure may prepare the precursor comprising the porous core and the dense shell by the control of the concentration of ammonia in the reactant solution and the stirring speed. When the positive electrode active material is prepared using the prepared precursor for a secondary particle, it is possible to obtain the positive electrode active material with high press density and improved electrochemical performance as shown in Table 1. In particular, it is difficult to absolutely compare due to different positive electrode active material compositions, but it can be seen that the positive electrode active materials show similar efficiency of 88.9% and 88.6%, while the absolute value of charge/discharge is found higher in example.

### [Experimental example 1: Observation of positive electrode active material]

The images of the positive electrode active materials prepared in comparative example and example observed with magnification using a scanning electron microscope (SEM) are shown in FIGS. 1 and 2, respectively.

### [Experimental example 2: Press density]

The press density is measured using HPRM-1000. Specifically, 5g of the positive electrode active material of each of example and comparative example is put into a cylindrical mold, and the mold containing the positive electrode active material is compressed to 63.694 MPa. Subsequently, the height of the compressed mold is measured using vernier calipers and the press density is determined. The results are shown in Table 1.

### [Experimental example 3: Average particle size]

D50 may be defined as a particle size at 50% of particle size distribution, and is measured using a laser diffraction method.

### [Experimental example 4: Average crystal size of primary particle]

The sample is measured using Bruker D8 Endeavor (Cu Kα, λ= 1.54 °Å) equipped with LynxEye XE-T position sensitive detector with the step size of 0.02° in the scan range of 90° FDS 0.5°, 2-theta 15°, to make the total scan time of 20 min.

Rietveld refinement of the measured data is performed, considering the charge at each site (metals at transition metal site +3, Ni at Li site +2) and cation mixing. In crystal size analysis, instrumental broadening is considered using Fundamental Parameter Approach (FPA) implemented in Bruker TOPAS program, and in fitting, all peaks in the measurement range are used. The peak shape fitting is only performed using Lorentzian contribution to First Principle (FP) among peak types available in TOPAS, and in this instance, strain is not considered. The crystal size results are shown in the above Table 1.

### [Experimental example 5: Tap density]

The tap density of the precursor is measured using TAP-2S (manufacturer: LOGAN) in accordance with ASTM B527-06.

## Claims

1. A method for manufacturing a positive electrode active material for a lithium secondary battery, comprising:
preparing a secondary particle precursor for a positive electrode active material, wherein the secondary particle precursor for a positive electrode active material is defined below, the method comprising:
(S1) a first stirring step of stirring a transition metal solution comprising a nickel containing raw material, a cobalt containing raw material and a manganese containing raw material, and a nitrogen containing chelating agent and a basic compound;
(S2) a second stirring step of stirring a result of the step (S1),
wherein a first stirring speed of the first stirring step is slower than a second stirring speed of the second stirring step, and
a concentration of the nitrogen containing chelating agent of the first stirring step is higher than a concentration of the nitrogen containing chelating agent of the second stirring step:
wherein
the secondary particle precursor comprises:
a core and a shell,
wherein a particle size D50 of the secondary particle precursor is 6±2 µm,
a particle size D50 of the core is 1 to 5 µm, and
the core has higher porosity than the shell, and
sintering the secondary particle precursor for a positive electrode active material to prepare an oxide as the positive electrode active material,
wherein the oxide is a secondary particle formed by agglomeration of primary macro particles having a particle size D50 of 1 µm or more, and the average crystal size of the primary macro particles is equal to or larger than 200 nm,
wherein D50 corresponds to 50% cumulative volume as determined by the laser diffraction method set out in the description and average crystal size is determined by X-ray diffraction analysis as set out in the description.

2. The method according to claim 1, wherein the porosity of the core of the secondary particle precursor is less than 2.0 g/cc on a tap density basis.

3. The method according to claim 1, wherein the porosity of the core of the secondary particle precursor is 1.9 g/cc or less on a tap density basis.

4. The method according to claim 1, wherein the particle size D50 of the core of the secondary particle precursor is 1 µm to 3 µm.

5. The method according to claim 1, wherein the porosity of the shell of the secondary particle precursor is 2.0 g/cc or more on a tap density basis.

6. The method according to claim 1, wherein the porosity of the shell of the secondary particle precursor is 2.1 g/cc or more on a tap density basis.

7. The method according to claim 1, wherein the secondary particle precursor is a nickel-based lithium transition metal hydroxide represented by LiaNi_{1-x-y}CoₓM1_{y}M2_{w}(OH)₂ wherein 1.0≤a≤1.5, 0≤x≤0.2, 0≤y≤0.2, 0≤w≤0.1, 0≤x+y≤0.2, M1 is at least one selected from the group consisting of Mn and Al, and M2 is at least one selected from the group consisting of Ba, Ca, Zr, Ti, Mg, Ta, Nb and Mo.

8. The method according to any one of claims 1 to 7, wherein the concentration of the nitrogen containing chelating agent of the first stirring step is 5000 ppm or more, and
the concentration of the nitrogen containing chelating agent of the second stirring step is 5000 ppm or less.

9. The method according to any one of claims 1 to 7, wherein the first stirring speed is 800 rpm or less, and the second stirring speed is 1000 rpm or more.

10. The method according to any one of claims 1 to 7, wherein the concentration of the nitrogen containing chelating agent of the first stirring step is 5000 ppm or more, and
the concentration of the nitrogen containing chelating agent of the second stirring step is 4000 ppm or less.

## Patentansprüche

1. Verfahren zur Herstellung eines Positivelektrodenaktivmaterials für eine Lithiumsekundärbatterie, umfassend:
Herstellen eines Sekundärpartikelvorläufers für ein Positivelektrodenaktivmaterial, wobei der Sekundärpartikelvorläufer für ein Positivelektrodenaktivmaterial nachstehend definiert ist, wobei das Verfahren umfasst:
(S1) einen ersten Rührschritt des Rührens einer Übergangsmetalllösung, die ein nickelhaltiges Ausgangsmaterial, ein kobalthaltiges Ausgangsmaterial und ein manganhaltiges Ausgangsmaterial sowie einen stickstoffhaltigen Chelatbildner und eine basische Verbindung umfasst;
(S2) einen zweiten Rührschritt des Rührens eines Ergebnisses des Schritts (S1),
wobei eine erste Rührgeschwindigkeit des ersten Rührschritts langsamer ist als eine zweite Rührgeschwindigkeit des zweiten Rührschritts, und
eine Konzentration des stickstoffhaltigen Chelatbildners des ersten Rührschritts höher ist als eine Konzentration des stickstoffhaltigen Chelatbildners des zweiten Rührschritts:
wobei
der Sekundärpartikelvorläufer umfasst:
einen Kern und eine Schale,
wobei eine Partikelgröße D50 des Sekundärpartikelvorläufers 6 ± 2 µm ist,
eine Partikelgröße D50 des Kerns 1 bis 5 µm ist, und
der Kern eine höhere Porosität als die Schale aufweist, und
Sintern des Sekundärpartikelvorläufers für ein Positivelektrodenaktivmaterial, um ein Oxid als das Positivelektrodenaktivmaterial herzustellen,
wobei das Oxid ein Sekundärpartikel ist, das durch Agglomeration von Primärmakropartikeln gebildet ist, die eine Partikelgröße D50 von 1 µm oder mehr aufweisen, und die durchschnittliche Kristallitgröße der Primärmakropartikel gleich oder größer als 200 nm ist,
wobei D50 dem kumulierten Volumen von 50 % entspricht, wie es durch das in der Beschreibung dargelegte Laserbeugungsverfahren bestimmt wird, und die durchschnittliche Kristallitgröße durch die in der Beschreibung dargelegte Röntgenbeugungsanalyse bestimmt wird.

2. Verfahren nach Anspruch 1, wobei die Porosität des Kerns des Sekundärpartikelvorläufers auf Klopfdichtebasis weniger als 2,0 g/cc beträgt.

3. Verfahren nach Anspruch 1, wobei die Porosität des Kerns des Sekundärpartikelvorläufers auf Klopfdichtebasis 1,9 g/cc oder weniger beträgt.

4. Verfahren nach Anspruch 1, wobei die Partikelgröße D50 des Kerns des Sekundärpartikelvorläufers 1 µm bis 3 µm beträgt.

5. Verfahren nach Anspruch 1, wobei die Porosität der Schale des Sekundärpartikelvorläufers auf Klopfdichtebasis 2,0 g/cc oder mehr beträgt.

6. Verfahren nach Anspruch 1, wobei die Porosität der Schale des Sekundärpartikelvorläufers auf Klopfdichtebasis 2,1 g/cc oder mehr beträgt.

7. Verfahren nach Anspruch 1, wobei der Sekundärpartikelvorläufer ein nickelbasiertes Lithiumübergangsmetallhydroxid ist, dargestellt durch LiaNi_{1-x-y}CoₓM1_{y}M2_{w}(OH)₂, wobei 1,0≤a≤1,5, 0≤x≤0,2, 0≤y≤0,2, 0≤w≤0,1, 0≤x+y≤0,2, wobei M1 mindestens eines ist, ausgewählt aus der aus Mn und Al bestehenden Gruppe, und M2 mindestens eines ist, ausgewählt aus der aus Ba, Ca, Zr, Ti, Mg, Ta, Nb und Mo bestehenden Gruppe.

8. Verfahren nach einem der Ansprüche 1 bis 7, wobei die Konzentration des stickstoffhaltigen Chelatbildners des ersten Rührschritts 5000 ppm oder mehr beträgt, und
die Konzentration des stickstoffhaltigen Chelatbildners des zweiten Rührschritts 5000 ppm oder weniger beträgt.

9. Verfahren nach einem der Ansprüche 1 bis 7, wobei die erste Rührgeschwindigkeit 800 rpm oder weniger beträgt, und die zweite Rührgeschwindigkeit 1000 rpm oder mehr beträgt.

10. Verfahren nach einem der Ansprüche 1 bis 7, wobei die Konzentration des stickstoffhaltigen Chelatbildners des ersten Rührschritts 5000 ppm oder mehr beträgt, und
die Konzentration des stickstoffhaltigen Chelatbildners des zweiten Rührschritts 4000 ppm oder weniger beträgt.

## Revendications

1. Procédé de fabrication d'un matériau actif d'électrode positive pour une batterie secondaire au lithium, comprenant :
la préparation d'un précurseur de particule secondaire pour un matériau actif d'électrode positive, dans lequel le précurseur de particule secondaire pour un matériau actif d'électrode positive est défini ci-dessous, le procédé comprenant :
(S1) une première étape d'agitation consistant à agiter une solution de métal de transition comprenant une matière première contenant du nickel, une matière première contenant du cobalt et une matière première contenant du manganèse, et un agent chélatant contenant de l'azote et un composé basique ;
(S2) une seconde étape d'agitation consistant à agiter un résultat de l'étape (S1), dans lequel une première vitesse d'agitation de la première étape d'agitation est plus lente qu'une seconde vitesse d'agitation de la seconde étape d'agitation, et
une concentration de l'agent chélatant contenant de l'azote de la première étape d'agitation est plus élevée qu'une concentration de l'agent chélatant contenant de l'azote de la seconde étape d'agitation :
dans lequel
le précurseur de particule secondaire comprend :
un noyau et une coquille,
dans lequel une taille de particule D50 du précurseur de particule secondaire est de 6±2 µm,
une taille de particule D50 du noyau est de 1 à 5 µm, et
le noyau a une porosité plus élevée que la coquille, et
le frittage du précurseur de particule secondaire pour un matériau actif d'électrode positive pour préparer un oxyde en tant que matériau actif d'électrode positive,
dans lequel l'oxyde est une particule secondaire formée par agglomération de macroparticules primaires ayant une taille de particule D50 de 1 µm ou plus, et la taille cristalline moyenne des macroparticules primaires est égale ou supérieure à 200 nm,
dans lequel D50 correspond à 50 % de volume cumulé tel que déterminé par la méthode de diffraction laser exposée dans la description et la taille cristalline moyenne est déterminée par analyse par diffraction des rayons X comme exposé dans la description.

2. Procédé selon la revendication 1, dans lequel la porosité du noyau du précurseur de particule secondaire est inférieure à 2,0 g/cc sur la base de la densité tassée.

3. Procédé selon la revendication 1, dans lequel la porosité du noyau du précurseur de particule secondaire est de 1,9 g/cc ou moins sur la base de la densité tassée.

4. Procédé selon la revendication 1, dans lequel la taille de particule D50 du noyau du précurseur de particule secondaire est de 1 µm à 3 µm.

5. Procédé selon la revendication 1, dans lequel la porosité de la coquille du précurseur de particule secondaire est de 2,0 g/cc ou plus sur la base de la densité tassée.

6. Procédé selon la revendication 1, dans lequel la porosité de la coquille du précurseur de particule secondaire est de 2,1 g/cc ou plus sur la base de la densité tassée.

7. Procédé selon la revendication 1, dans lequel le précurseur de particule secondaire est un hydroxyde de métal de transition au lithium à base de nickel représenté par LiaNi_{1-x-y}CoₓM1_{y}M2_{w}(OH)₂ dans lequel 1,0≤a≤1,5, 0≤x≤0,2, 0≤y≤0,2, 0≤w≤0,1, 0≤x+y≤0,2, M1 est au moins un élément choisi dans le groupe constitué de Mn et Al, et M2 est au moins un élément choisi dans le groupe constitué de Ba, Ca, Zr, Ti, Mg, Ta, Nb et Mo.

8. Procédé selon l'une quelconque des revendications 1 à 7, dans lequel la concentration de l'agent chélatant contenant de l'azote de la première étape d'agitation est de 5000 ppm ou plus, et
la concentration de l'agent chélatant contenant de l'azote de la seconde étape d'agitation est de 5000 ppm ou moins.

9. Procédé selon l'une quelconque des revendications 1 à 7, dans lequel la première vitesse d'agitation est de 800 rpm ou moins, et la seconde vitesse d'agitation est de 1000 rpm ou plus.

10. Procédé selon l'une quelconque des revendications 1 à 7, dans lequel la concentration de l'agent chélatant contenant de l'azote de la première étape d'agitation est de 5000 ppm ou plus, et
la concentration de l'agent chélatant contenant de l'azote de la seconde étape d'agitation est de 4000 ppm ou moins.
